# EUROPÄISCHE PATENTSCHRIFT

(11) **EP 3 798 038 B1**
(45) Veröffentlichungstag und Bekanntmachung des Hinweises auf die Patenterteilung: **10.04.2024**
(21) Anmeldenummer: 20198655.1
(22) Anmeldetag: 28.09.2020
(51) Int. Cl.: B60K 17/28, F16D 25/061, F16D 21/04, A01B 71/06, F16H 3/089

(54) **ZAPFWELLENSYSTEM UND LANDWIRTSCHAFTLICHES FAHRZEUG**
POWER TAKE-OFF SYSTEM AND AGRICULTURAL VEHICLE
SYSTÈME DE PROSE DE FORCE ET VÉHICULE AGRICOLE

(30) Priorität: 30.09.2019 DE 102019215057
(43) Veröffentlichungstag der Anmeldung: 31.03.2021
(60) Teilanmeldung: 24160737.3
(73) Patentinhaber: Deere & Company, Moline, IL 61265 (US)
(72) Erfinder: EISENHARDT, CHRISTOPH, 68163 Mannheim (DE); BHUPINDER SIN, SANJOTRA, 68163 Mannheim (DE)
(74) Vertreter: Stein, Stefan

(56) Entgegenhaltungen:
- EP-A1- 1 983 217
- EP-A2- 0 244 378
- DE-A1- 2 802 677
- US-A- 3 352 165
- US-A- 4 271 942
- US-A- 4 287 778
- US-A- 5 667 330

## Beschreibung

Die Erfindung betrifft ein Zapfwellensystem gemäss dem Oberbegriff des unabhängigen Anspruchs 1 und ein landwirtschaftliches Fahrzeug mit einem derartigen Zapfwellensystem.

Üblicherweise sind Zapfwellensysteme am vorderen und/oder hinteren Ende von landwirtschaftlichen Fahrzeugen vorgesehen, insbesondere Zugfahrzeugen, Traktoren oder Schleppern. Im Speziellen umfassen die Zapfwellensysteme eine antreibbare Ausgangswelle und einen Zapfwellenstumpf, an dem eine Geräteantriebswelle befestigt werden kann und aus dem ein Arbeitsgerät oder ein Anbaugerät ein Drehmoment ableiten kann. Typische Arbeitsgeräte, die einen Antrieb erfordern, sind Ballenpressen, Kreiseleggen und Spritzen.

Die bekannten Zapfwellensysteme, insbesondere mehrstufige Zapfwellensysteme, können unterschiedliche Drehzahlen bereitstellen und/oder ermöglichen ein Umschalten der Betriebsarten der Zapfwellensysteme im lastfreien Zustand. Moderne Zapfwellensysteme können zwischen 1 bis 4 Gänge aufweisen. Ausserdem erfolgt die Verwendung von Zapfwellenstümpfen mit Verzahnungen mit 6, 21, 20 oder 22 Zähnen entsprechend der ISO 500, in welcher die Zapfwellenstümpfe nach Typ 1-4 kategorisiert sind. Je nach übertragener Leistung ist dabei eine andere Geometrie vorzusehen. Im Speziellen können landwirtschaftliche Fahrzeuge mit Zapfwellensystemen ausgestattet sein, die zwei Gänge, einen ersten Gang mit einer Ausgangsdrehzahl von 540 U/min und einen zweiten Gang mit einer Ausgangsdrehzahl von 1000 U/min bei der Nennmotordrehzahl des Traktors, aufweisen. Ein Zapfwellenstumpf, der mit 540 U/min betrieben wird, kann dabei eine Verzahnung mit 6 Zähnen aufweisen, und ein Zapfwellenstumpf, der mit 1000 U/min betrieben wird, kann eine Verzahnung mit 20 oder 21 Zähnen aufweisen. Die unterschiedliche Ausführung des Zapfwellenstumpfs für die verschiedenen Betriebsdrehzahlen kann der Sicherung gegen unbeabsichtigtes Anbringen eines für 540 U/min ausgelegten Gerätes an einem Fahrzeug, das für 1000 U/min ausgelegt ist, dienen.

Trotz dieses Unterschieds in der Ausgestaltung des Zapfwellensystems, insbesondere des Zapfwellenstumpfs ist der Bediener immer noch darauf angewiesen, die richtige Ausgangsdrehzahl für das Arbeitsgerät zu aktivieren, wodurch ein Risiko einer falschen Wahl des Übersetzungsverhältnisses und der daraus resultierenden Beschädigung des Zapfwellensystems und/oder des Arbeitsgeräts besteht. Das Zapfwellensystem kann mittels eines elektrischen Schalters und/oder einer Software betätigbar sein. Ausserdem werden am Zapfwellensystem zusätzlich Sensoren vorgesehen, um zu erkennen, welches Ende des Zapfwellenstumpfs oder welcher Zapfwellenstumpf am Zapfwellensystem angeordnet ist. Eine andere Möglichkeit ist den ersten oder zweiten Gang mechanisch zu blockieren, falls der Bediener die falsche Ausgangsdrehzahl für das angebrachte Arbeitsgerät zu aktivieren versucht. Die EP 2 922 721 B1 offenbart ein solches Zapfwellensystem, wobei auf einer Welle drei Zahnräder sowie zwei bzw. drei Kupplungen mit ringförmigen Kolben-Zylinderanordnungen vorgesehen sind. Die Kupplungen werden über Bohrungen in der Welle mit Fluid betätigt. In die Welle ist ein Steuerventil mit einem in einer Bohrung verschiebbaren Kolben vorgesehen. Die Position des Ventilkolbens ist abhängig von der Gestaltung des eingesteckten Stumpfendes. Das Steuerventil verhindert bei eingeschobenem Ventilkolben eine Fluidbetätigung der mittleren Kupplung.

Die US 4 271 942 A offenbart ein Zapfwellengetriebe mit zwei Geschwindigkeitsstufen. Die US 5 667 330 A offenbart einen Verschlussmechanismus für ein Zapfwellengetriebe. In diesen beiden Dokumenten ist jeweils in einer Welle ein verstellbarer Kolben zum Betätigen eines Schaltelements vorgesehen, das wahlweise mit einer von Zwei Zahnräder in Eingriff gebracht werden kann. Die Position des Kolbens ist abhängig von der Gestaltung des eingesteckten Stumpfendes.

Die wesentlichen Probleme der bekannten Zapfwellensysteme bzw. Fahrzeuge sind, dass diese zu viel Bauraum benötigen und kostenintensiv sind. Darüber hinaus sind die Zapfwellensysteme konstruktiv kompliziert aufgebaut, da diese insbesondere Sensoren zur Erkennung des Zapfwellenstumpfs benötigen. Dadurch sind die Zapfwellensysteme reparaturanfällig und weisen eine hohe Abnutzung auf. Ausgehend von diesem Stand der Technik ist es daher eine Aufgabe der vorliegenden Erfindung ein Zapfwellensystem und ein landwirtschaftliches Fahrzeug vorzuschlagen, die die aus dem Stand der Technik bekannten Nachteile weitgehend vermeiden, insbesondere ein Zapfwellensystem und ein landwirtschaftliches Fahrzeug vorzuschlagen, die konstruktiv einfach ausgestaltet sind und/oder eine geringere Reparaturanfälligkeit und/oder weniger Abnutzung aufweisen.

Diese Aufgabe wird durch ein Zapfwellensystem mit den Merkmalen des Anspruchs 1 und ein landwirtschaftliches Fahrzeug mit den Merkmalen des Anspruchs 7 gelöst.

Die abhängigen Ansprüche beziehen sich auf besonders vorteilhafte Ausführungsformen der Erfindung.

Erfindungsgemäß wird ein Zapfwellensystem für ein landwirtschaftliches Fahrzeug vorgeschlagen. Das Zapfwellensystem umfasst eine Ausgangswelle mit einer an einem Ende der Ausgangswelle vorgesehenen Fassung für einen Zapfwellenstumpf, wobei der Zapfwellenstumpf zumindest teilweise, im Speziellen auch vollständig, in der Fassung anordenbar ist. Das Zapfwellensystem kann also den Zapfwellenstumpf umfassen. Die Ausgangswelle weist eine fluidbetätigte Verstellanordnung auf, die in der Ausgangswelle angeordnet, insbesondere integriert ist. Die Ausgangswelle, insbesondere eine Verstellanordnung, umfasst eine Bohrung, die sich von der Fassung, insbesondere von einer Basis der Fassung, axial in die Ausgangswelle erstreckt. Die Ausgangswelle, insbesondere die Verstellanordnung, umfasst weiter einen ersten Kolben, der innerhalb der Bohrung in der Ausgangswelle verstellbar, bevorzugt bewegbar und/oder verschiebbar und/oder einstellbar, angeordnet ist. Das Zapfwellensystem, insbesondere die Ausgangswelle, umfasst weiter ein Schaltelement, das mittels des ersten Kolbens verstellbar ist, insbesondere auch einstellbar und/oder bewegbar und/oder verschiebbar ist. Das Zapfwellensystem umfasst ausserdem ein erstes Zahnrad und ein zweites Zahnrad, die mittels des Schaltelements mit der Ausgangswelle in Eingriff bringbar sind, bevorzugt drehfest in Eingriff bringbar sind. Der erste Kolben ist dabei, insbesondere in eine axiale Richtung der Ausgangswelle, zwischen einer ersten Position, in der der erste Kolben das Schaltelement derart verstellt, dass das erste Zahnrad mit dem Schaltelement in Eingriff steht, und einer zweiten Position verstellbar, insbesondere bewegbar und/oder verschiebbar und/oder auch einstellbar, in der der erste Kolben das Schaltelement derart verstellt, dass das zweite Zahnrad mit dem Schaltelement in Eingriff steht. Die Ausgangswelle, insbesondere die Verstellanordnung, weist einen zweiten Kolben auf, der zumindest teilweise am, insbesondere im ersten Kolben verstellbar, bevorzugt bewegbar und/oder verschiebbar und/oder einstellbar, angeordnet ist, besonders bevorzugt axial bewegbar und/oder verschiebbar angeordnet ist, beispielsweise innerhalb einer Kolbenbohrung im ersten Kolben. Der zweite Kolben kann auch innerhalb der Bohrung in der Ausgangswelle verstellbar, bevorzugt bewegbar und/oder verschiebbar und/oder einstellbar angeordnet sein, besonders bevorzugt axial bewegbar und/oder verschiebbar angeordnet sein. Der erste Kolben, und somit insbesondere auch das Schaltelement, ist mittels des zweiten Kolbens in die Neutralposition verstellbar, insbesondere bewegbar und/oder verschiebbar und/oder einstellbar.

Das Zapfwellensystem kann ein mehrstufiges Zapfwellensystem sein. Das Zapfwellensystem bzw. das mehrstufige Zapfwellensystem für ein landwirtschaftliches Fahrzeug, insbesondere ein Zugfahrzeug oder einen Traktor, Schlepper oder ähnliches sein. Im Allgemeinen kann das Zapfwellensystem am landwirtschaftlichen Fahrzeug angeordnet sein, insbesondere vorne, hinten und/oder mittig. Das Zapfwellensystem kann eine Zapfwellensteuerung und/oder eine Eingangswelle umfassen. Das Zapfwellensystem kann ein erstes und ein zweites Zahnradpaar umfassen. Das erste Zahnradpaar kann das erste Zahnrad und ein drittes Zahnrad umfassen. Das zweite Zahnradpaar kann das zweite Zahnrad und ein viertes Zahnrad umfassen. Das dritte und/oder vierte Zahnrad können dabei drehfest mit der Eingangswelle verbunden sein. Ebenso kann das Zapfwellensystem aber auch drei oder vier oder mehr Zahnradpaare umfassen, wobei wenigstens ein Zahnrad je Zahnradpaar schaltbar ist. Jedes Zahnradpaar kann mindestens ein Zahnrad umfassen, das mit der Eingangswelle verbunden ist, und ein weiteres Zahnrad umfassen, das mit der Ausgangswelle mittels des Schaltelements drehfest verbindbar ist. Die Eingangswelle kann mit der Ausgangswelle zwischen einem Motorausgang und dem Zapfwellenstumpf angeordnet sein. Die Eingangswelle kann mit der Ausgangswelle mittels eines Zahnradpaars antreibbar verbunden sein. Im Speziellen kann die Eingangswelle mittels des ersten oder zweiten Zahnradpaares antreibbar mit der Ausgangswelle gekoppelt oder koppelbar sein.

Das Schaltelement kann auf der Mantelfläche der Ausgangswelle angeordnet sein. Das Schaltelement kann mit der Ausgangswelle in Eingriff stehen, bevorzugt drehfest in Eingriff stehen. Das Schaltelement kann mit dem ersten Kolben verbunden oder gekoppelt, insbesondere als Teil des ersten Kolbens ausgebildet oder am ersten Kolben befestigt sein. Das Schaltelement ermöglicht es, ein Zahnrad, insbesondere das erste oder zweite Zahnrad, drehfest mit der Ausgangswelle zu verbinden, also das Zapfwellensystem zumindest mit zwei Gängen zu betreiben. Die erste Position kann dabei dem ersten Gang entsprechen und die zweite Position dem zweiten Gang. Bei einer Anordnung, die zwei Zahnräder mit einem Schaltelement bedient, kann eine kompakte Bauweise realisiert werden. Es können auch zwei oder mehrere Schaltelemente vorgesehen sein, insbesondere kann die Ausgangswelle ein erstes und ein zweites Schaltelement aufweisen, mit denen das erste und zweite Zahnrad individuell schaltbar sind. Insbesondere kann aber auch die Eingangswelle ein drittes Schaltelement aufweisen.

In der Neutralposition kann das Schaltelement mit keinem Zahnrad, insbesondere weder mit dem ersten oder zweiten Zahnrad, in Eingriff stehen. Das Schaltelement kann somit derart ausgebildet und/oder angeordnet sein, dass es ermöglicht die Zahnräder, insbesondere das erste oder zweite Zahnrad, drehfest mit der Ausgangswelle zu verbinden oder diese in der Neutralposition im Freilauf zu betreiben. Der erste Kolben kann also in axiale Richtung der Ausgangswelle zwischen der ersten Position und/oder zweiten Position und/oder der Neutralposition verschiebbar sein, sodass das Schaltelement ebenfalls in axiale Richtung der Ausgangswelle verstellbar ist. Ist der erste Kolben in der ersten Position, in der der erste Kolben das Schaltelement derart einstellt, dass das erste Zahnrad mit dem Schaltelement in Eingriff steht, kann das Zapfwellensystem im ersten Gang mit der niedrigeren Drehzahl, insbesondere 540 U/min, betrieben werden. Ist der Kolben in der zweiten Position, in der der erste Kolben das Schaltelement derart einstellt, dass das zweite Zahnrad mit dem Schaltelement in Eingriff steht, kann das Zapfwellensystem im zweiten Gang mit der höheren Drehzahl, insbesondere 1000 U/min, betrieben werden. Der erste Kolben kann aber auch zwischen einer dritten, vierten oder mehreren Positionen verstellbar sein. In der dritten Position kann der erste Kolben das Schaltelement derart verstellen, dass ein drittes Zahnrad mit dem Schaltelement in Eingriff steht. In der vierten Position kann der erste Kolben das Schaltelement derart verstellen, dass ein viertes Zahnrad mit dem Schaltelement in Eingriff steht.

Wesentlich für die Erfindung ist der zweiteilige Aufbau des Kolbens, der eine Reduktion des Bauraums für die Ausgangswelle ermöglicht, da auf zusätzliche Kuppel- und Schaltelemente zur Kopplung der Zahnräder und zum Schalten in die Neutralposition verzichtet werden kann. Ausserdem ist das Zapfwellensystem konstruktiv einfacher ausgestaltet, sodass beispielsweise die Reparaturanfälligkeit und/oder der Verschleiss des Zapfwellensystems reduziert werden kann.

In Ausgestaltung der Erfindung ist der zweite Kolben, insbesondere innerhalb der Kolbenbohrung, mittels des Zapfwellenstumpfs, insbesondere auch in Abhängigkeit von einer Ausrichtung des Zapfwellenstumpfs in der Fassung, derart verstellbar, bevorzugt einstellbar und/oder verschiebbar, dass eine Bewegung des ersten Kolbens in die zweite Position mittels des zweiten Kolbens blockiert wird, also insbesondere auch ein Verstellen des Schaltelements zumindest teilweise verhindert wird. Mit anderen Worten, der erste Kolben kann in Abhängigkeit von einer Ausrichtung und/oder Anordnung des Zapfwellenstumpfs, insbesondere eines ersten oder zweiten Stumpfendes, in der Fassung mittels des zweiten Kolbens blockierbar sein. Der zweite Kolben kann also mittels des Zapfwellenstumpfs zwischen einer ersten Stellung, in der der zweite Kolben zumindest teilweise in die Fassung hineinragt und der zweite Kolben zumindest teilweise in einer Ausnehmung des Zapfwellenstumpfs aufnehmbar ist, und einer zweiten Stellung verstellbar, insbesondere verschiebbar und/oder bewegbar sein, in der der Zapfwellenstumpf den zweiten Kolben derart verstellt, dass dieser den ersten Kolben blockiert, sodass eine Bewegung des ersten Kolbens in die zweite Position verhindert wird. Im Speziellen kann der Zapfwellenstumpf ein erstes Stumpfende mit einem ersten Profil, insbesondere einer Ausnehmung, und einer ersten Verzahnung und/oder ein zweites Stumpfende mit einem zweiten Profil und einer zweiten Verzahnung aufweisen. Der Zapfwellenstumpf kann also eine kurze Welle mit einer oder zwei oder mehreren Verzahnungen sein, einmal zum Antrieb und einmal zum Abtrieb sein. Im Falle eines wendbaren Zapfwellenstumpf kann eine dritte Verzahnung zur Adaptierung an unterschiedliche Gelenkwellensteckverzahnungen vorgesehen sein. Statt einem wendbaren Zapfwellenstumpf können auch zwei oder mehr Zapfwellenstümpfe getauscht werden. Der Zapfwellenstumpf mit dem ersten Stumpfende kann in der Fassung angeordnet sein, wobei die Ausnehmung am ersten Stumpfende den zweiten Kolben, der zumindest teilweise in die Fassung hineinragt, aufnehmen kann. In diesem Fall kann der erste Kolben in die erste und zweite Position verstellbar sein. Der Zapfwellenstumpf kann aber auch mit dem zweiten Stumpfende in der Fassung angeordnet sein, wobei der in die Fassung hineinragende zweite Kolben vom zweiten Stumpfende in Richtung des ersten Kolbens verstellt wird. In diesem Fall kann der erste Kolben nur in die erste Position verstellt werden und ein Verstellen des ersten Kolbens in die zweite Position ist mittels des zweiten Kolbens blockierbar bzw. wird blockiert. Prinzipiell können aber auch zwei Zapfwellenstümpfe mit jeweils einem Profil und einer Verzahnung am jeweils ersten Stumpfende vorgesehen sein. Die Fassung kann ausserdem einen lösbaren Verschlussmechanismus zum Sichern des Zapfwellenstumpfs umfassen. Somit kann vorteilhafterweise ein Mechanismus zum Blockieren der zweiten Position des ersten Kolbens, also des Gangs mit der höheren Drehzahl, bereitgestellt werden. Von Vorteil kann dadurch automatisch das Einschalten des Zapfwellenstumpfs mit höherer Drehzahl in Abhängigkeit von einer Ausrichtung des Zapfwellenstumpfs in der Fassung oder dem Zapfwellenstumpftyp verhindert werden. Ausserdem wird die Zuverlässigkeit des Zapfwellensystems verbessert und die Verwendung von Sensoren vermieden. Dies stellt eine erhebliche Verbesserung der Sicherheit des Zapfwellensystems dar und erfordert, dass der Zapfwellenstumpf in der richtigen Orientierung oder der richtige Zapfwellenstumpftyp in der Fassung angeordnet ist, bevor eine entsprechende Drehzahl aktiviert werden kann.

In Ausgestaltung der Erfindung umfasst der zweite Kolben ein erstes Kolbenelement und ein zweites Kolbenelement und ein drittes Kolbenelement, wobei das erste Kolbenelement zumindest teilweise im ersten Kolben verstellbar angeordnet ist, das zweite Kolbenelement zumindest teilweise im ersten Kolbenelement verstellbar angeordnet ist und das dritte Kolbenelement zumindest teilweise im zweiten Kolbenelement verstellbar angeordnet ist. Das erste, zweite und dritte Kolbenelement können verstellbar angeordnet sein, bevorzugt bewegbar und/oder verschiebbar und/oder einstellbar angeordnet sein, besonders bevorzugt axial bewegbar und/oder verschiebbar angeordnet sein. Das erste Kolbenelement kann beispielsweise innerhalb der Kolbenbohrung im ersten Kolben verstellbar angeordnet sein. Ausserdem kann das erste Kolbenelement auch innerhalb der Bohrung in der Ausgangswelle verstellbar angeordnet sein, bevorzugt bewegbar und/oder verschiebbar und/oder einstellbar angeordnet sein, besonders bevorzugt axial bewegbar und/oder verschiebbar angeordnet sein. Das zweite Kolbenelement kann beispielsweise innerhalb einer weiteren Kolbenbohrung im ersten Kolbenelement verstellbar angeordnet sein. Ausserdem kann das zweite Kolbenelement auch innerhalb der Bohrung in der Ausgangswelle verstellbar angeordnet sein, bevorzugt bewegbar und/oder verschiebbar und/oder einstellbar angeordnet sein, besonders bevorzugt axial bewegbar und/oder verschiebbar angeordnet sein. Das dritte Kolbenelement kann zumindest teilweise innerhalb einer dritten Kolbenbohrung im zweiten Kolbenelement verstellbar angeordnet sein. Ausserdem kann das dritte Kolbenelement zumindest teilweise in die Fassung und/oder die weitere Kolbenbohrung hineinragen und/oder auch innerhalb der Bohrung in der Ausgangswelle verstellbar angeordnet sein, bevorzugt bewegbar und/oder verschiebbar und/oder einstellbar angeordnet sein, besonders bevorzugt axial bewegbar und/oder verschiebbar angeordnet sein. Das dritte Kolbenelement kann mit dem ersten Kolben verbunden, insbesondere an den ersten Kolben gekoppelt oder an diesem befestigt sein. Das dritte Kolbenelement kann mittels des Zapfwellenstumpfs, in Abhängigkeit von einer Ausrichtung des Zapfwellenstumpfs in der Fassung, derart verstellbar, bevorzugt einstellbar und/oder verschiebbar sein, dass eine Bewegung des ersten Kolbens in die zweite Position mittels des ersten und zweiten und dritten Kolbenelements blockiert wird, also insbesondere auch ein Verstellen des Schaltelements verhindert wird. Diese Massnahme ermöglicht eine grössere Dämpfung des Mechanismus, sodass die Reparaturanfälligkeit und/oder der Verschleiss reduziert wird.

In Ausgestaltung der Erfindung ist das zweite Kolbenelement im ersten Kolbenelement mittels eines ersten Rückstellelements gelagert, insbesondere in einer Gleichgewichtslage gelagert, und/oder das dritte Kolbenelement umfasst ein erstes und zweites Kolbenstück, die verstellbar im zweiten Kolbenelement angeordnet sind, wobei zwischen dem ersten und zweiten Kolbenstück ein zweites Rückstellelement angeordnet ist, insbesondere das erste und zweite Kolbenstück mittels des zweiten Rückstellelements in einer Gleichgewichtslage gelagert sind. Das erste und/oder zweite Rückstellelement können ein elastisches Element, insbesondere ein Federelement oder eine Feder sein. Das erste und/oder zweite Rückstellelement können in der Neutralposition in einer Gleichgewichts- oder Ruhelage sein. Das erste Rückstellelement kann das erste und/oder zweite Kolbenelement, insbesondere das erste Kolbenelement, derart vorspannen, dass der erste Kolben mittels des ersten Rückstellelements wieder in die Neutralposition verstellbar, insbesondere verschiebbar und/oder bewegbar ist. Der erste Kolben kann insbesondere mittels des ersten Rückstellelements aus der ersten und zweiten Position wieder in die Neutralposition verstellbar sein.

Das zweite Rückstellelement kann das dritte Kolbenelement derart vorspannen, dass der erste Kolben mittels des zweiten Rückstellelements wieder in die Neutralposition verstellbar, insbesondere verschiebbar und/oder bewegbar ist. Das dritte Kolbenelement kann, wenn der erste Kolben in die erste oder zweite Position verstellt wird, mittels des zweiten Rückstellelements im zweiten Kolbenelement vorgespannt sein. Das erste und zweite Kolbenstück können mittels des zweiten Rückstellelements miteinander verbunden und/oder mittels des zweiten Rückstellelements gekoppelt sein, insbesondere kann das zweite Rückstellelement zumindest teilweise am ersten und zweiten Kolbenstück befestigt sein. Das zweite Rückstellelement und das erste und zweite Kolbenstück können entlang einer Achse der Ausgangswelle angeordnet sein, insbesondere koaxial entlang der Achse der Ausgangswelle angeordnet sein. Das erste Kolbenstück kann mit dem ersten Kolben verbunden, insbesondere an den ersten Kolben gekoppelt oder an diesem befestigt sein. Das zweite Kolbenstück kann in die Fassung hineinragen.

Das erste Kolbenstück kann mittels des Zapfwellenstumpfs, in Abhängigkeit von einer Ausrichtung des Zapfwellenstumpfs in der Fassung, derart verstellbar, bevorzugt einstellbar und/oder verschiebbar sein, dass das zweite Rückstellelement das erste und zweite Kolbenstück vorspannt und eine Bewegung des ersten Kolbens in die zweite Position mittels des ersten und zweiten Kolbenelements und des ersten und zweiten Kolbenstücks blockiert wird, also insbesondere auch ein Verstellen des Schaltelements verhindert wird. Das erste und zweite Rückstellelement ermöglichen eine grössere Dämpfung des Zapfwellensystems und eine automatische mechanische Bedienbarkeit.

Erfindungsgemäß ist in der Ausgangswelle, insbesondere zumindest teilweise in der Ausgangswelle und zumindest teilweise dem ersten Kolben, eine erste Fluidförderbohrung vorgesehen, durch welche ein unter Druck stehendes Fluid, insbesondere hydraulisches Fluid, derart in die Ausgangswelle, insbesondere Bohrung, förderbar ist, dass der erste Kolben in die erste Position bewegt wird, und/oder in der Ausgangswelle eine zweite Fluidförderbohrung vorgesehen ist, durch welche das unter Druck stehende Fluid derart in die Ausgangswelle, insbesondere Bohrung, förderbar ist, dass der erste Kolben in die zweite Position bewegt wird. Die Verstellanordnung kann die erste und zweite Fluidförderbohrung umfassen. Die erste Fluidförderbohrung kann zweiteilig sein. Die erste Fluidförderbohrung kann also zumindest teilweise in der Ausgangswelle und zumindest teilweise im ersten Kolben ausgebildet sein. Dabei kann der Teil der ersten Fluidförderbohrung, der im Kolben ausgebildet ist, zumindest teilweise in dem Teil der ersten Fluidförderbohrung, der in der Ausgangswelle ausgebildet ist, angeordnet sein. Der Teil der ersten Fluidförderbohrung, der in der Ausgangswelle angeordnet ist, kann also einen anderen Durchmesser, insbesondere einen grösseren Durchmesser, aufweisen, als der Teil der ersten Fluidförderbohrung, der im ersten Kolben angeordnet ist. Das unter Druck stehende Fluid kann in der ersten Fluidförderbohrung über die Ausgangswelle in den ersten Kolben in die Kolbenbohrung geführt werden, sodass der erste Kolben in die erste Position bewegt wird. Die Kolbenbohrung kann dabei zumindest teilweise, aber auch vollständig, als erste Kammer ausgebildet sein und sich mit dem unter Druck stehenden Fluid füllen, sodass der erste Kolben in die erste Position bewegt wird. Das unter Druck stehende Fluid kann in der zweiten Fluidförderbohrung über die Ausgangswelle zwischen den ersten Kolben und die Basis der Bohrung geführt werden, sodass der erste Kolben in die zweite Position bewegt wird. Das Volumen zwischen dem ersten Kolben und der Basis der Bohrung kann dabei zumindest teilweise, aber auch vollständig, als zweite Kammer ausgebildet sein und sich mit dem unter Druck stehenden Fluid füllen, sodass der erste Kolben in die zweite Position bewegt wird. Das Zapfwellensystem oder das landwirtschaftliche Fahrzeug kann ausserdem Mittel, beispielsweise Schläuche und/oder Rohre und/oder Leitungen und/oder eine Pumpe, zum Zuführen des Fluids zu der jeweiligen Förderbohrung umfassen. Die erste oder zweite Position können also durch das unter Druck stehende Fluid aktiviert werden, welches durch die erste und/oder zweite Fluidförderbohrung in der Ausgangswelle förderbar ist. Vorteilhafterweise ermöglicht dies eine konstruktiv einfachere Ausgestaltung des Zapfwellensystems, da mechanische Verbindungen in Form von Schaltstangen, Schaltgabeln und Schaltgestänge im Getriebe entfallen. Durch die Bereitstellung der ersten und zweiten Fluidförderbohrung in der Ausgangswelle kann der Mechanismus zur Wahl des ersten und zweiten Zahnrads auf einfach Art und Weise, insbesondere hydraulisch, gesteuert werden. Aufgrund des konstruktiv optimierten Aufbaus ist das Zapfwellensystem langlebiger und einfacher zu bedienen.

In Ausgestaltung der Erfindung weist der Zapfwellenstumpf ein erstes und zweites Stumpfende auf. Das erste und zweite Stumpfende sind zumindest teilweise, insbesondere vollständig, in der Fassung anordenbar und das erste Stumpfende weist eine vom zweiten Stumpfende verschiedene Verzahnung auf. Das erste Stumpfende kann eine erste Verzahnung mit 6, 21, 22 oder 22 Zähnen oder eine zylindrische Form ohne Zähne aufweisen. Das zweite Stumpfende kann eine zweite Verzahnung mit 6, 21, 22 oder 22 Zähnen oder eine zylindrische Form ohne Zähne aufweisen. Die Verzahnung mit 6 Zähnen kann ein Keilwellenprofil mit 35 mm Durchmesser aufweisen. Die Verzahnung mit 20 oder 21 Zähnen kann ein Keilwellenprofil mit 35 mm Durchmesser und die Verzahnung mit 21 Zähnen kann ein Keilwellenprofil mit 45 mm Durchmesser aufweisen. Weiterhin kann eine Verzahnung mit 22 Zähnen verwendet werden, die ein Keilwellenprofil mit 57,5 mm Durchmesser aufweist. Vorteilhafterweise kann dadurch in Abhängigkeit von der Anordnung der jeweiligen Verzahnung in der Fassung erkannt werden, welches Stumpfende in der Fassung angeordnet ist.

In Ausgestaltung der Erfindung weist das erste Stumpfende, insbesondere eine Basis des ersten Stumpfendes, ein erstes Profil mit einer Ausnehmung auf und das zweite Stumpfende, insbesondere eine Basis des zweiten Stumpfendes, weist ein zweites Profil auf, das flach ist, also keine Ausnehmung aufweist. Das erste Profil des ersten Stumpfendes kann also aufgrund der Ausnehmung das hervorstehende zweite Kolbenstück zumindest teilweise, insbesondere vollständig, aufnehmen, wenn dieses in der Ausnehmung angeordnet ist. Dadurch wird der erste Kolben nicht blockiert, kann also in die erste und zweite Position verstellt werden. Das zweite Stumpfende mit dem zweiten Profil kann das zweite Kolbenstück derart verstellen, insbesondere in Richtung des ersten Kolbenstücks verschieben, dass mittels des ersten Kolbenstücks eine Bewegung des ersten Kolbens blockierbar ist, insbesondere dass ein Verstellen des Schaltelements in die zweite Position verhindert wird. Im Speziellen kann also der erste Kolben, wenn das erste Stumpfende, das eine Ausnehmung und die erste Verzahnung, insbesondere mit 6 Zähnen, in der Fassung angeordnet ist, in die erste und zweite Position verstellbar sein, sodass eine Aktivierung der niedrigeren Drehzahl (540 oder 1000 Umdrehungen pro Minute) und der höheren Drehzahl (1000 oder 1300 Umdrehungen pro Minute) möglich ist. Im Speziellen kann der erste Kolben, wenn das zweite Stumpfende, das keine Ausnehmung und die zweite Verzahnung, insbesondere mit 21 Zähnen oder einer zylindrischen Form, in der Fassung angeordnet ist, nur in die erste Position verstellbar sein, sodass nur eine Aktivierung der niedrigeren Drehzahl und keine Aktivierung der höheren Drehzahl möglich ist. Dies ermöglicht von Vorteil ein konstruktiv weniger reparatur- und verschleissanfälliges Zapfwellensystem zu erstellen.

Die Erfindung betrifft weiter ein landwirtschaftliches Fahrzeug mit einem

Zapfwellensystem nach einem der Ansprüche 1 bis 6.

Das landwirtschaftliche Fahrzeug kann ein Zugfahrzeug, Traktor oder Schlepper sein. Das Zapfwellensystem kann in Fahrtrichtung des Fahrzeugs vorne und/oder in der Mitte und/oder hinten am Fahrzeug angeordnet sein. In bestimmten Ausführungsformen kann das landwirtschaftliche Fahrzeug ein Zapfwellensystem umfassen, um über eine Gelenkwelle Leistung für ein Arbeitsgerät bereitzustellen. Das erfindungsgemässe landwirtschaftliche Fahrzeug weist die oben beschriebenen Vorteile des erfindungsgemässen Zapfwellensystems auf.

Das erfindungsgemässe Zapfwellensystem und/oder das landwirtschaftliche Fahrzeug kann eine Steuereinrichtung, insbesondere zwei oder mehrere Steuereinrichtungen, aufweisen, die betreibbar ist, das Zapfwellensystem und/oder das landwirtschaftliche Fahrzeug, insbesondere die fluidbetätigte Verstellanordnung, derart zu steuern und/oder zu regeln, bevorzugt zu verstellen, besonders bevorzugt einzustellen und/oder zu verändern, dass der erste Kolben zwischen der ersten und zweiten Position und der Neutralposition verstellbar ist. Ausserdem kann mit der Steuereinheit das Zapfwellensystem und/oder das landwirtschaftliche Fahrzeug steuerbar und/oder regelbar sein. Die Steuereinheit (engl. ECU = electronic control unit oder ECM = electronic control module) kann ein elektronisches Modul und/oder ein eingebettetes System sein. Die Steuereinheit kann am Zapfwellensystem und/oder dem landwirtschaftlichen Fahrzeug vorgesehen sein. Die Steuereinheit kann auch auf das Zapfwellensystem und das landwirtschaftliche Fahrzeug verteilt sein. Die Steuereinheit und das Zapfwellensystem und/oder das landwirtschaftliche Fahrzeug, insbesondere ein erstes und/oder zweiten Ventil zur Steuerung bzw. Regelung der Zufuhr des Fluids in die erste und zweite Fluidförderbohrung, können mittels eines Kabels oder Drahts oder aber drahtlos, also beispielsweise mittels Funks, miteinander verbunden werden.

Im Folgenden werden die Erfindung sowie weitere Vorteile und vorteilhafte Weiterbildungen und Ausgestaltungen der Erfindung in Hinsicht anhand von Ausführungsbeispielen und unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. In den schematischen Zeichnungen zeigen:
- Fig. 1: eine schematische Seitenansicht eines ersten Ausführungsbeispiels eines erfindungsgemässen landwirtschaftlichen Fahrzeugs, und
- Fig. 2: eine schematische Darstellung eines erfindungsgemässen Zapfwellensystems mit einem ersten Kolben in einer Neutralposition, und
- Fig. 3: eine schematische Darstellung eines erfindungsgemässen Zapfwellensystems mit dem Kolben in der ersten Position, und
- Fig. 4: eine schematische Draufsicht auf das Zapfwellensystem mit dem ersten Kolben in der zweiten Position, und
- Fig. 5: eine schematische Draufsicht auf das Zapfwellensystem mit dem ersten Kolben in der Neutralposition und einer blockierten zweiten Position.

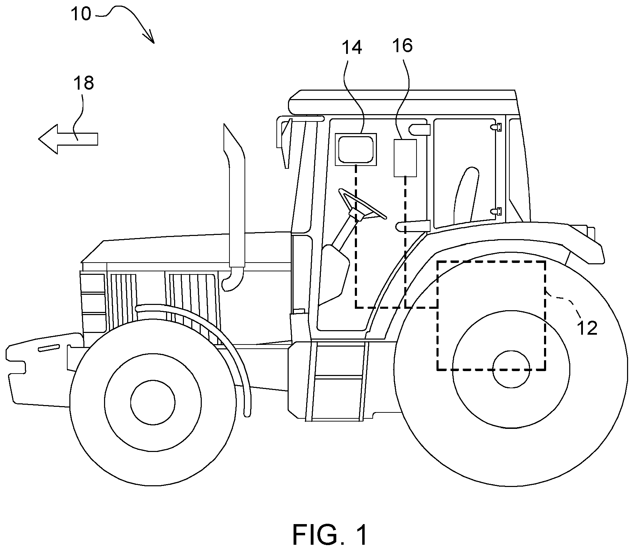

Figur 1 zeigt eine schematische Seitenansicht eines ersten Ausführungsbeispiels des erfindungsgemässen landwirtschaftlichen Fahrzeugs 10, das sich in Vorwärtsfahrtrichtung 18 bewegen kann. Das in Figur 1 schematisch dargestellte Fahrzeug 10 umfasst ein erfindungsgemässes Zapfwellensystem 12. Das Zapfwellensystem 12 kann verwendet werden, um eine Versorgung eines Arbeitsgeräts mit Antriebsleistung zu ermöglichen. An einem solchen Fahrzeug 10 ist das Zapfwellensystem 12 üblicherweise in Vorwärtsfahrrichtung vorne, in der Mitte und/oder hinten am Fahrzeug 10 vorgesehen, in Figur 1 hinten. An das Fahrzeug 10 und das Zapfwellensystem 12 kann ein Arbeitsgerät ankoppelbar und anschließbar sein. Übliche Drehzahlen des Zapfwellensystems 12 sind 540 und/oder 1000 und/oder 1300 Umdrehungen pro Minute. Es kann weiterhin möglich sein, das Zapfwellensystem 12 bei den genannten Drehzahlen in einem reduzierten Leistungsmodus zu betreiben. Das landwirtschaftliche Fahrzeug 10 kann eine Steuereinrichtung 16 und/oder ein Anzeigegerät 14 aufweisen. Das Steuergerät 16 kann aber ebenso als ein Teil des Zapfwellensystems 12 ausgebildet sein.

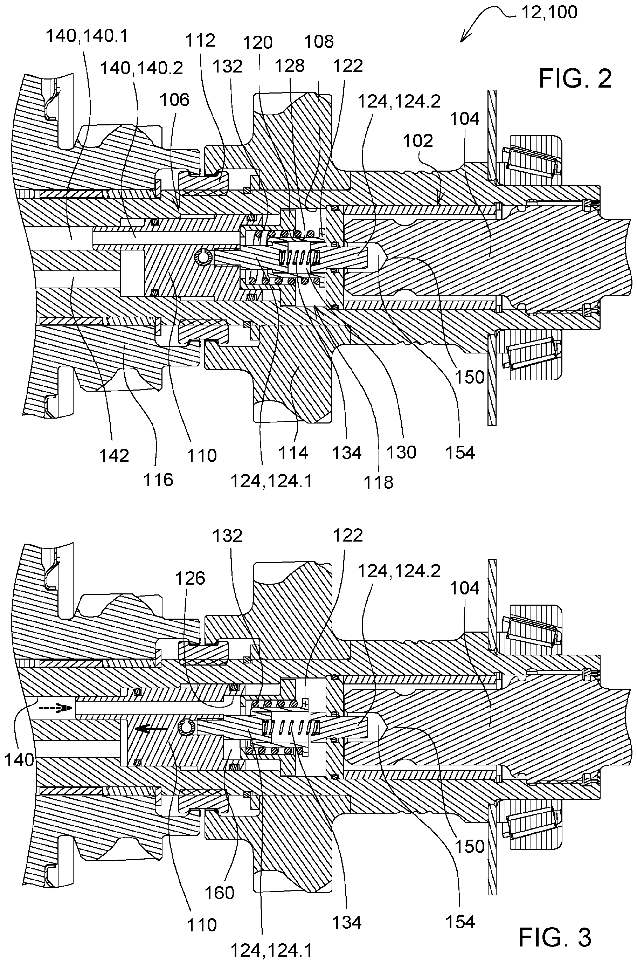

Figur 2 zeigt eine schematische Darstellung eines erfindungsgemässen Zapfwellensystems 12, insbesondere Teile des Zapfwellensystems 12, mit einem ersten Kolben 110 in einer Neutralposition. Das in Figur 2 gezeigte Zapfwellensystem 12 entspricht im Wesentlichen dem in Figur 1 gezeigten Zapfwellensystem 12, sodass im Folgenden lediglich auf die Unterschiede eingegangen wird. Das Zapfwellensystem 12 umfasst eine Ausgangswelle 100 mit einer an einem Ende der Ausgangswelle vorgesehenen Fassung 102 für einen Zapfwellenstumpf 104, wobei der Zapfwellenstumpf 104 zumindest teilweise in der Fassung 102 anordenbar ist. Im Weiteren weist die Ausgangswelle 100 eine fluidbetätigte Verstellanordnung auf, die in der Ausgangswelle 100 angeordnet ist. Die Ausgangswelle 100, insbesondere die Verstellanordnung 106 umfasst eine Bohrung 108, die sich von der Fassung 102 axial in die Ausgangswelle 100 erstreckt, und einen ersten Kolben 110, der innerhalb der Bohrung 108 in der Ausgangswelle 100 verstellbar angeordnet ist. Darüber hinaus ist ein Schaltelement 112 vorgesehen, das mittels des ersten Kolbens 110 verstellbar ist. Das Schaltelement 112 ist ausserdem mit dem ersten Kolben 110 verbunden und steht mit der Ausgangswelle 100 drehfest in Eingriff. Das Zapfwellensystem 12 umfasst weiter ein erstes Zahnrad 114 und ein zweites Zahnrad 116, die mittels des Schaltelements 112 mit der Ausgangswelle 100 in Eingriff bringbar sind, insbesondere drehfest in Eingriff bringbar sind. Der erste Kolben 110 ist zwischen einer ersten Position, in der der erste Kolben 110 das Schaltelement 112 derart einstellt, dass das erste Zahnrad 114 mit dem Schaltelement 112 in Eingriff steht, und einer zweiten Position verstellbar, in der der erste Kolben 110 das Schaltelement 112 derart einstellt, dass das zweiten Zahnrad 116 mit dem Schaltelement 112 in Eingriff steht. Die Ausgangswelle 100, insbesondere die Verstellanordnung 106, weist einen zweiten Kolben 118 auf, der zumindest teilweise am ersten Kolben 110 verstellbar, insbesondere verschiebbar angeordnet ist, wobei der zweite Kolben 118 zumindest teilweise im ersten Kolben 110 innerhalb einer Kolbenbohrung (Bezugszeichen 126, siehe Figur 3) verstellbar, insbesondere verschiebbar angeordnet ist. Der erste Kolben 110 ist mittels des zweiten Kolbens 118 in eine Neutralposition verstellbar, insbesondere verschiebbar. Der zweite Kolben 118 kann ausserdem mittels des Zapfwellenstumpfs 104 derart verstellbar sein, dass eine Bewegung des ersten Kolbens 110 in die zweite Position mittels des zweiten Kolbens 118 blockierbar ist. Wie in Figur 2 gezeigt, ist der erste Kolben 110 auch in eine Neutralposition verstellbar, insbesondere bewegbar und/oder verschiebbar, in der das Schaltelement 112 weder mit dem ersten noch mit dem zweiten Zahnrad 114, 116 in Eingriff steht.

Steht das Schaltelement 112 in Eingriff mit dem ersten oder zweiten Zahnrad 114, 116 verbindet es diese drehfest mit der Ausgangswelle 100. Ist der erste Kolben 110 in der ersten Position, kann das Zapfwellensystem mit einer, insbesondere der niedrigeren Drehzahl, betrieben werden. Ist der erste Kolben 110 in der zweiten Position, kann das Zapfwellensystem 12 mit einer anderen, insbesondere der höheren Drehzahl, betrieben werden. Der zweite Kolben 118 umfasst ein erstes Kolbenelement 120, ein zweites Kolbenelement 122 und ein drittes Kolbenelement 124. Das erste Kolbenelement 120 ist zumindest teilweise im ersten Kolben 110 innerhalb der Kolbenbohrung (Bezugszeichen 126, siehe Figur 3) verstellbar angeordnet. Das zweite Kolbenelement 122 ist zumindest teilweise im ersten Kolbenelement 120 innerhalb einer weiteren Kolbenbohrung 128 verstellbar angeordnet. Darüber hinaus ist das zweite Kolbenelement 122 im ersten Kolbenelement 120 mittels eines ersten Rückstellelements 132 gelagert.

Das dritte Kolbenelement 124 ist zumindest teilweise im zweiten Kolbenelement 122 innerhalb einer dritten Kolbenbohrung 130 verstellbar angeordnet. Das dritte Kolbenelement 124 umfasst ein erstes und zweites Kolbenstück 124.1, 124.2, die verstellbar im zweiten Kolbenelement 122 innerhalb der dritten Kolbenbohrung 130 angeordnet sind, wobei zwischen dem ersten und zweiten Kolbenstück 124.1, 124.2 ein zweites Rückstellelement 134 angeordnet ist. Das erste Kolbenstück 124.1 ist an den ersten Kolben 110 gekoppelt und das zweite Kolbenstück 124.2 ragt in die 102 Fassung hinein. Das erste und zweite Rückstellelement 132, 134 sind als ein elastisches Element ausgebildet, hier eine Feder. Wenn der erste Kolben 110 sich in der Neutralposition befindet, können das erste und/oder zweite Rückstellelement 132, 134 in einer Gleichgewichts- oder Ruhelage sein.

Ausserdem ist eine erste Fluidförderbohrung 140 zumindest teilweise in der Ausgangswelle 100 und zumindest teilweise im ersten Kolben 110 vorgesehen, durch welche ein unter Druck stehendes Fluid derart in die Ausgangswelle 100 förderbar ist, dass der erste Kolben 110 in die erste Position bewegt wird. Die erste Fluidförderbohrung ist also zweiteilig ausgebildet, wobei der Teil der ersten Fluidförderbohrung 140.2, der im Kolben 110 ausgebildet ist, zumindest teilweise in dem Teil der ersten Fluidförderbohrung 140.1, der in der Ausgangswelle 100 ausgebildet ist, angeordnet ist. Ausserdem ist in der Ausgangswelle 100 eine zweite Fluidförderbohrung 142 ausgebildet, durch welche das unter Druck stehende Fluid derart in die Ausgangswelle 100 förderbar ist, dass der erste Kolben 110 in die zweite Position bewegt wird.

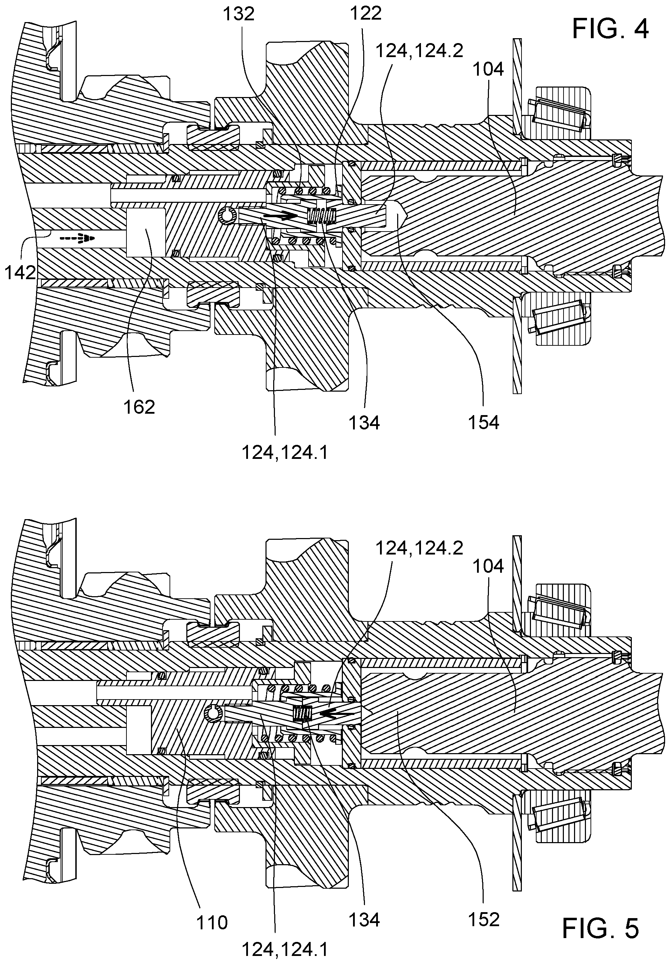

Der Zapfwellenstumpf 104 weist ein erstes Stumpfende 150 und zweites Stumpfende (Bezugszeichen 152, siehe Figur 5) auf, die zumindest teilweise in der Fassung anordenbar sind. Das erste Stumpfende 150 weist eine vom zweiten Stumpfende 152 verschiedene Verzahnungen auf. Das erste Stumpfende 150 kann beispielsweise eine erste Verzahnung mit 6 Zähnen aufweisen und das zweite Stumpfende 152 eine zweite Verzahnung mit 21 Zähnen aufweisen. Ausserdem umfasst das erste Stumpfende 150 ein erstes Profil mit einer Ausnehmung 154 und das zweite Stumpfende 152 ein zweites Profil das flach ist (siehe Figur 5).

Figur 3 zeigt eine schematische Darstellung eines erfindungsgemässen Zapfwellensystems 12, insbesondere Teile des Zapfwellensystems 12 mit dem ersten Kolben 110 in der ersten Position. Das in Figur 3 gezeigte Zapfwellensystem 12 entspricht im Wesentlichen dem in den Figuren 1 und 2 gezeigten Zapfwellensystem, sodass im Folgenden lediglich auf die Unterschiede eingegangen wird. Die Kolbenbohrung 126 ist als erste Kammer 160 ausgebildet. Füllt sich die erste Kammer 160 mit dem unter Druck stehenden Fluid, wird der erste Kolben 110 in die erste Position bewegt. Dabei spannt das erste Rückstellelement 132 das zweite Kolbenelement 122 derart vor, dass der erste Kolben 110 mittels des ersten Rückstellelements 132 wieder in die Neutralposition verstellbar ist. Ausserdem kann zusätzlich das zweite Rückstellelement 134 das dritte Kolbenelement 124 derart vorspannen, dass der erste Kolben 110 auch mittels des zweiten Rückstellelements 134 in die Neutralposition verstellbar ist. Ausserdem ist der Zapfwellenstumpf 104 mit dem ersten Stumpfende 150 mit dem ersten Profil und der ersten Verzahnung in der Fassung 102 angeordnet, wobei die Ausnehmung 154 am ersten Stumpfende 150 das zweite Kolbenstück 124.2, das in die Fassung 102 hineinragt, aufnimmt.

Figur 4 zeigt eine schematische Draufsicht auf das Zapfwellensystem 12, insbesondere Teile des Zapfwellensystems 12, mit dem ersten Kolben 110 in der zweiten Position. Das in Figur 4 gezeigte Zapfwellensystem 12 entspricht im Wesentlichen dem in den Figuren 1 bis 3 gezeigten Zapfwellensystem 12, sodass im Folgenden lediglich auf die Unterschiede eingegangen wird. Das unter Druck stehende Fluid kann in der zweiten Fluidförderbohrung 142 über die Ausgangswelle 100 in das Volumen zwischen den ersten Kolben 110 und die Basis der Bohrung 108 geführt werden, das als zweite Kammer 162 ausgebildet ist. Füllt sich die zweite Kammer 162 mit dem unter Druck stehenden Fluid, wird der erste Kolben 110 in die zweite Position bewegt. Dabei spannt das erste Rückstellelement 32 das erste und zweite Kolbenelement 120, 122, insbesondere aber das erste Kolbenelement 120 derart vor, dass der erste Kolben 110 mittels des über das erste Rückstelleelement 132 vorgespannte ersten Kolbenelements 120 wieder in die Neutralposition verstellbar ist. Ausserdem kann zusätzlich das zweite Rückstellelement 134 das dritte Kolbenelement 124 derart vorspannen, dass der erste Kolben 110 auch mittels des zweiten Rückstellelements 134 wieder in die Neutralposition verstellbar ist.

Figur 5 zeigt eine schematische Draufsicht auf das Zapfwellensystem 12, insbesondere Teile des Zapfwellensystems 12, mit dem ersten Kolben 110 in der Neutralposition und einer blockierten zweiten Position. Das in Figur 5 gezeigte Zapfwellensystem 12 entspricht im Wesentlichen dem in den Figuren 1 bis 4 gezeigten Zapfwellensystem 12, sodass im Folgenden lediglich auf die Unterschiede eingegangen wird. Wesentlicher Unterschied zu den in den Figuren 1 bis 4 gezeigten Zapfwellensystemen 12 ist, dass der Zapfwellenstumpf 104 mit dem zweiten Stumpfende 152 mit dem zweiten Profil und der zweiten Verzahnung in der Fassung 102 angeordnet ist, wobei das in die Fassung 102 hineinragende zweite Kolbenstück 124.2 vom zweiten Stumpfende 152 in Richtung des ersten Kolbenstücks und entlang einer Achse des dritten Kolbenelements 124 verstellt wird.

Dabei spannt das zweite Rückstellelement 134 das dritte Kolbenelement 124 derart vor, also somit auch den zweiten Kolben 118 und dessen Bestandteile insgesamt, dass ein Verstellen des ersten Kolbens 110 in die zweite Position mittels des zweiten Kolbens 118 blockierbar ist bzw. blockiert wird.

## Patentansprüche

1. Zapfwellensystem für ein landwirtschaftliches Fahrzeug (10), umfassend eine Ausgangswelle (100) mit einer an einem Ende der Ausgangswelle (100) vorgesehenen Fassung (102) für einen Zapfwellenstumpf (104), wobei der Zapfwellenstumpf (104) zumindest teilweise in der Fassung (102) anordenbar ist, und die Ausgangswelle (100) eine fluidbetätigte Verstellanordnung (106) aufweist, die in der Ausgangswelle (100) angeordnet ist, wobei die Ausgangswelle (100), insbesondere die Verstellanordnung (106), eine Bohrung (108) umfasst, die sich von der Fassung (102) axial in die Ausgangswelle (100) erstreckt, und einen ersten Kolben (110) umfasst, der innerhalb der Bohrung (108) in der Ausgangswelle (100) verstellbar angeordnet ist, wobei ein Schaltelement (112) vorgesehen ist, das mittels des ersten Kolbens (110) verstellbar ist, und ein erstes Zahnrad (114) und ein zweites Zahnrad (116), die mittels des Schaltelements (112) mit der Ausgangswelle in Eingriff bringbar sind, wobei der erste Kolben (110) zwischen einer ersten Position, in der der erste Kolben (110) das Schaltelement (112) derart verstellt, dass das erste Zahnrad (114) mit dem Schaltelement (112) in Eingriff steht, und einer zweiten Position, in der der erste Kolben (110) das Schaltelement (112) derart verstellt, dass das zweite Zahnrad (116) mit dem Schaltelement (112) in Eingriff steht, verstellbar ist, wobei in der Ausgangswelle (100) eine erste Fluidförderbohrung (140) vorgesehen ist, durch welche ein unter Druck stehendes Fluid derart in die Ausgangswelle (100) förderbar ist, dass der erste Kolben (110) in die erste Position bewegt wird, und/oder in der Ausgangswelle (100) eine zweite Fluidförderbohrung (142) vorgesehen ist, durch welche das unter Druck stehende Fluid derart in die Ausgangswelle (100) förderbar ist, dass der erste Kolben (110) in die zweite Position bewegt wird wobei die Ausgangswelle (100) insbesondere die Verstellanordnung (106), einen zweiten Kolben (118) aufweist, der zumindest teilweise am ersten Kolben (110) verstellbar angeordnet ist und der erste Kolben (110) mittels des zweiten Kolbens (118) in eine Neutralposition verstellbar ist.

2. Zapfwellensystem nach Anspruch 1, **dadurch gekennzeichnet, dass** der zweite Kolben (118) mittels des Zapfwellenstumpfs (104) derart verstellbar ist, dass eine Bewegung des ersten Kolbens (110) in die zweite Position mittels des zweiten Kolbens (118) blockierbar ist.

3. Zapfwellensystem nach Anspruch 1 oder 2, **dadurch gekennzeichnet, dass** der zweite Kolben (118) ein erstes Kolbenelement (120) und ein zweites Kolbenelement (122) und ein drittes Kolbenelement (124) umfasst, wobei das erste Kolbenelement (120) zumindest teilweise im ersten Kolben (110) verstellbar angeordnet ist, das zweite Kolbenelement (122) zumindest teilweise im ersten Kolbenelement (120) verstellbar angeordnet ist und das dritte Kolbenelement (124) zumindest teilweise im zweiten Kolbenelement (122) verstellbar angeordnet ist.

4. Zapfwellensystem nach mindestens einem der vorangehenden Ansprüche, **dadurch gekennzeichnet, dass** das zweite Kolbenelement (122) im ersten Kolbenelement (120) mittels eines ersten Rückstellelements (132) gelagert ist, und/oder das dritte Kolbenelement (124) ein erstes und zweites Kolbenstück (124.1, 124.2) umfasst, die verstellbar im zweiten Kolbenelement (122) angeordnet sind, wobei zwischen dem ersten und zweiten Kolbenstück (124.1, 124.2) ein zweites Rückstellelement (134) angeordnet ist.

5. Zapfwellensystem nach mindestens einem der vorangehenden Ansprüche, **dadurch gekennzeichnet, dass** der Zapfwellenstumpf (104) ein erstes und zweites Stumpfende (150, 152) aufweist, die zumindest teilweise in der Fassung (102) anordenbar sind und das erste Stumpfende (150) eine vom zweiten Stumpfende (152) verschiedene Verzahnungen aufweist.

6. Zapfwellensystem nach mindestens einem der vorangehenden Ansprüche, **dadurch gekennzeichnet, dass** das erste Stumpfende (150) ein erstes Profil mit einer Ausnehmung (154) aufweist und das zweite Stumpfende (152) ein zweites Profil aufweist, das flach ist.

7. Landwirtschaftliches Fahrzeug mit einem Zapfwellensystem (12) nach einem der Ansprüche 1 bis 6.

## Claims

1. Power take-off shaft system for an agricultural vehicle (10), comprising an output shaft (100) with a socket (102) for a power take-off shaft stub (104) which is provided at one end of the output shaft (100), wherein the power take-off shaft stub (104) is able to be arranged at least partially in the socket (102), and the output shaft (100) comprises a fluid-actuated adjustment arrangement (106) which is arranged in the output shaft (100), wherein the output shaft (100), in particular the adjustment arrangement (106), comprises a bore (108) which extends axially from the socket (102) into the output shaft (100), and comprises a first piston (110) which is arranged so as to be adjustable inside the bore (108) in the output shaft (100), wherein a shifting element (112) which is adjustable by means of the first piston (110) is provided, and a first gearwheel (114) and a second gearwheel (116) which are able to be brought into engagement with the output shaft by means of the shifting element (112) are provided, wherein the first piston (110) is adjustable between a first position in which the first piston (110) adjusts the shifting element (112) such that the first gearwheel (114) is engaged with the shifting element (112) and a second position in which the first piston (110) adjusts the shifting element (112) such that the second gearwheel (116) is engaged with the shifting element (112), wherein a first fluid conveyance bore (140) is provided in the output shaft (100), a pressurized fluid being able to be conveyed thereby into the output shaft (100) such that the first piston (110) is moved into the first position, and/or a second fluid conveyance bore (142) is provided in the output shaft (100), the pressurized fluid being able to be conveyed thereby into the output shaft (100) such that the first piston (110) is moved into the second position, wherein the output shaft (100), in particular the adjustment arrangement (106), has a second piston (118) which is arranged so as to be adjustable at least partially on the first piston (110), and the first piston (110) is adjustable by means of the second piston (118) into a neutral position.

2. Power take-off shaft system according to Claim 1, **characterized in that** the second piston (118) is adjustable by means of the power take-off shaft stub (104) such that a movement of the first piston (110) into the second position is blockable by means of the second piston (118).

3. Power take-off shaft system according to Claim 1 or 2, **characterized in that** the second piston (118) comprises a first piston element (120) and a second piston element ((122) and a third piston element (124), wherein the first piston element (120) is arranged so as to be adjustable at least partially in the first piston (110), the second piston element (122) is arranged so as to be adjustable at least partially in the first piston element (120) and the third piston element (124) is arranged so as to be adjustable at least partially in the second piston element (122).

4. Power take-off shaft system according to at least one of the preceding claims, **characterized in that** the second piston element (122) is mounted in the first piston element (120) by means of a first restoring element (132), and/or the third piston element (124) comprises a first and second piston part (124.1, 124.2) which are arranged so as to be adjustable in the second piston element (122), wherein a second restoring element (134) is arranged between the first and second piston part (124.1, 124.2).

5. Power take-off shaft system according to at least one of the preceding claims, **characterized in that** the power take-off shaft stub (104) has a first and second stub end (150, 152) which are able to be arranged at least partially in the socket (102) and the first stub end (150) comprises a toothing which is different from the second stub end (152).

6. Power take-off shaft system according to at least one of the preceding claims, **characterized in that** the first stub end (150) has a first profile with a recess (154) and the second stub end (152) has a second profile which is planar.

7. Agricultural vehicle having a power take-off shaft system (12) according to one of Claims 1 to 6.

## Revendications

1. Système de prise de force pour un véhicule agricole (10), comprenant un arbre de sortie (100) avec une douille (102) prévue à une extrémité de l'arbre de sortie (100) pour un bout (104) d'arbre de prise de force, le bout (104) d'arbre de prise de force étant apte à être agencé au moins partiellement dans la douille (102), et l'arbre de sortie (100) présente un agencement de réglage (106) actionné par un fluide, qui est agencé dans l'arbre de sortie (100), l'arbre de sortie (100), en particulier l'agencement de réglage (106), comprenant un alésage (108), qui s'étend axialement dans l'arbre de sortie (100) à partir de la douille (102), et un premier piston (110) qui est agencé de manière réglable à l'intérieur de l'alésage (108) dans l'arbre de sortie (100), un élément de commutation (112) étant prévu, qui est réglable au moyen du premier piston (110), et une première roue dentée (114) et une deuxième roue dentée (116) qui sont aptes à être amenées en prise avec l'arbre de sortie au moyen de l'élément de commutation (112), le premier piston (110) étant déplacé entre une première position, dans laquelle le premier piston (110) déplace l'élément de commutation (112) de telle sorte que la première roue dentée (114) soit en prise avec l'élément de commutation (112), et une deuxième position, dans laquelle le premier piston (110) déplace l'élément de commutation (112) de telle sorte que la deuxième roue dentée (116) soit en prise avec l'élément de commutation (112), un premier alésage (140) de transport de fluide étant prévu dans l'arbre de sortie (100), à travers lequel un fluide sous pression est apte à être transporté dans l'arbre de sortie (100), de telle sorte que le premier piston (110) soit déplacé dans la première position, et/ou un deuxième alésage (142) de transport de fluide est prévu dans l'arbre de sortie (100), à travers lequel le fluide sous pression est apte à être transporté dans l'arbre de sortie (100), de telle sorte que le premier piston (110) soit déplacé dans la deuxième position, l'arbre de sortie (100), en particulier l'agencement de réglage (106), présentant un deuxième piston (118), qui est agencé de manière réglable au moins partiellement sur le premier piston (110) et le premier piston (110) est réglable dans une position neutre au moyen du deuxième piston (118).

2. Système de prise de force selon la revendication 1, **caractérisé en ce que** le deuxième piston (118) est réglable au moyen du bout (104) d'arbre de prise de force de telle sorte qu'un mouvement du premier piston (110) vers la deuxième position est apte à être bloqué au moyen du deuxième piston (118).

3. Système de prise de force selon la revendication 1 ou 2, **caractérisé en ce que** le deuxième piston (118) comprend un premier élément de piston (120) et un deuxième élément de piston (122) et un troisième élément de piston (124), le premier élément de piston (120) étant agencé au moins partiellement dans le premier piston (110) de manière réglable, le deuxième élément de piston (122) étant agencé au moins partiellement dans le premier élément de piston (120) de manière réglable et le troisième élément de piston (124) étant agencé au moins partiellement dans le deuxième élément de piston (122) de manière réglable.

4. Système de prise de force selon au moins l'une des revendications précédentes, **caractérisé en ce que** le deuxième élément de piston (122) est monté dans le premier élément de piston (120) au moyen d'un premier élément de rappel (132), et/ou le troisième élément de piston (124) comprend une première et une deuxième pièce de piston (124.1, 124.2) qui sont agencées de manière réglable dans le deuxième élément de piston (122), un deuxième élément de rappel (134) étant agencé entre la première et la deuxième pièces de piston (124.1, 124.2).

5. Système de prise de force selon au moins l'une des revendications précédentes, **caractérisé en ce que** le bout (104) d'arbre de prise de force présente une première et une deuxième extrémité (150, 152) de bout, qui sont aptes à être agencées au moins partiellement dans la douille (102) et **en ce que** la première extrémité de bout (150) présente une partie de prise différente de la deuxième extrémité de bout (152).

6. Système de prise de force selon au moins l'une des revendications précédentes, **caractérisé en ce que** la première extrémité de bout (150) présente un premier profil avec un évidement (154) et la deuxième extrémité de bout (152) présente un deuxième profil, qui est plat.

7. Véhicule agricole équipé d'un système de prise de force (12) selon l'une des revendications 1 à 6.
